Europäisches Patentamt

European Patent Office

Office européen des brevets

(19)

(11) Numéro de publication: **0 237 455**
**B1**

(12) **FASCICULE DE BREVET EUROPEEN**

(45) Date de publication du fascicule du brevet: **13.06.90**

(51) Int. Cl.⁵: **A 21 B 1/44**

(21) Numéro de dépôt: **87440005.4**

(22) Date de dépôt: **30.01.87**

(54) **Four de boulangerie à chariot tournant.**

(30) Priorité: **05.02.86 FR 8601666**

(43) Date de publication de la demande:
**16.09.87 Bulletin 87/38**

(45) Mention de la délivrance du brevet:
**13.06.90 Bulletin 90/24**

(84) Etats contractants désignés:
**AT BE CH DE ES GB GR IT LI LU NL SE**

(56) Documents cités:
**GB-A- 855 029**
**US-A-3 537 405**

(73) Titulaire: **Voegtlin, René**
**2, rue de la Colline Oberhausbergen**
**F-67200 Strasbourg (FR)**

(72) Inventeur: **Voegtlin, René**
**2, rue de la Colline Oberhausbergen**
**F-67200 Strasbourg (FR)**

(74) Mandataire: **Aubertin, François**
**Cabinet Lepage & Aubertin Innovations et**
**Prestations 4, rue de Haguenau**
**F-67000 Strasbourg (FR)**

Courier Press, Leamington Spa, England.

**Description**

L'invention concerne un four de boulangerie à chariot tournant pour la cuisson des produits de boulangerie, de viennoiserie, de pâtisserie et similaires comprenant une chambre de cuisson obturée par une porte d'enfournement, un coffret de commandes électriques, un canal de recyclage pourvu d'un ventilateur de recyclage et de moyens de chauffage de l'air en provenance de la chambre de cuisson, une mécanique et une motorisation de la rotation du chariot, un collecteur de soufflage avec ses fentes verticales et un appareil de production de vapeur.

On connaît déjà, par le document US—A—3 537 405, des fours de boulangerie à chariot tournant pour la cuisson des produits de boulangerie, de viennoiserie, de pâtisserie et similaires comprenant une chambre de cuisson obturée par une porte d'enfournement, un coffret des commandes électriques, un canal de recyclage pourvu d'un ventilateur de recyclage et d'une batterie de chauffage, une mécanique et une motorisation de la rotation du chariot, un collecteur de soufflage avec ses fentes verticales et un appareil de production de vapeur.

Dans ces fours connus est enfourné et/ou défourné un chariot ouvert constitué par une échelle roulante supportant des plaques disposées les unes au-dessus des autres et sur lesquelles se trouvent les produits à cuire.

Le chariot introduit dans le four de boulangerie est soit roulé sur un disque soumis à un mouvement de rotation et disposé au niveau du plancher de la chambre de cuisson, soit accroché à un crochet également soumis à un mouvement de rotation et disposé sous le plafond de la chambre de cuisson.

Dans ces fours de boulangerie, la cuisson des produits s'effectue par l'intermédiaire de filets d'air chaud injectés constamment au travers des fentes verticales aménagées dans une des parois de la chambre de cuisson et traversant le chariot horizontalement entre les plaques pendant que le chariot est soumis à un mouvement de rotation lente autour de son axe vertical. A l'opposé des fentes de soufflage, l'air ayant chauffé les produits est aspiré par le ventilateur de recyclage. Ainsi, on obtient une excellente régularité de cuisson des produits en tous points de la surface rectangulaire de chaque plaque et ceci-indépendamment de la forme des produits et/ou de la hauteur entre les différentes plaques disposées les unes au-dessus des autres.

Cependant, ce type de fours présente plusieurs inconvénients. Ce type de fours à chariot tournant confère à ce genre de fours un encombrement externe important dont la largeur est de l'ordre de deux à trois fois la largeur du chariot. En effet, le chariot étant enfourné perpendiculairement à sa largeur, c'est-à-dire par le plus petit côté du rectangle de base du parallélépipède droit qu'il représente, doit pouvoir tourner à l'intérieur de la chambre de cuisson. Ainsi, le chariot tournant engendre un volume cylindrique dont le diamètre correspond à la diagonale du chariot vue en plan et ce volume cylindrique doit pouvoir s'inscrire dans la chambre de cuisson.

Par ailleurs, traditionnellement, l'enveloppe extérieure de ces fours de boulangerie à chariot tournant représente un parallélépipède rectangle dont la base est intégralement au contact du sol suivant une surface rectangulaire souvent assez proche d'une surface carrée. Ce mode de construction habituel présente de nombreux inconvénients lors de la livraison dudit four, d'une part, en ce qui concerne son déchargement depuis le plateau du camion et, d'autre part, en ce qui concerne sa mise en place dans son local d'exploitation.

En effet, il est, par exemple, impossible de se servir d'un chariot élévateur à fourches qui est pourtant l'engin de manutention le plus usuel et le plus répandu. Pour y pallier, il faudrait que le four soit livré sur une palette, ce qui pose ensuite le difficile problème de sa dépalettisation car ce four est relativement haut et lourd. De surcroît, ce problème de dépalettisation se pose généralement à l'intérieur du bâtiment comportant presque toujours une marche, ce qui nécessite de lever le four de la hauteur de cette marche mais où le palan d'un camion, même équipé d'une grue, devient inopérant.

Si, le cas échéant, il serait possible de ripper horizontalement un tel four lorsque l'on reste au même niveau pour l'introduire dans son local d'exploitation sa grande largeur ne permet pas de passer ce four par l'ouverture de la porte d'accès à ce local d'exploitation, notamment s'il s'agit d'une porte à simple battant de largeur normale.

Pour contourner ces inconvénients de mise à terre du four à chariot tournant depuis le plateau du camion de livraison, de son introduction dans le bâtiment et sa mise en place dans le local d'exploitation, on livre traditionnellement ce four en vrac de pièces détachées qui sont montées et assemblées à l'emplacement de mise en service. Un tel montage est non seulement long et coûteux mais peut présenter, pour le boulanger, une perte de gain notamment lorsqu'il y a lieu de remplacer un ancien four par un nouveau four à chariot tournant.

La présente invention a pour but de remédier à ces inconvénients. L'invention, telle qu'elle est caractérisée dans les revendications, résout le problème consistant à créer un four de boulangerie à chariot tournant pour la cuisson des produits de boulangerie, de viennoiserie, de pâtisserie et similaires comprenant une chambre de cuisson obturée par une porte d'enfournement, un coffret de commandes électriques, un canal de recyclage pourvu d'un ventilateur de recyclage et de moyens de chauffage de l'air en provenance de la chambre de cuisson, une mécanique et une motorisation de la rotation du chariot, un collecteur de soufflage avec ses fentes verticales et un appareil de production de vapeur, et comportant une structure constructive, de largeur correspondant au diamètre du volume cylindrique engendré par le chariot tournant, constituée d'un noyau central, de forme parallélépipédique rectangle de largeur correspondant à la largeur de la porte d'enfournement, elle-même déterminée par la largeur du chariot tournant, et de deux couvercles latéraux amovibles présentant un évidement dont la profondeur est légèrement supérieure à la moitié de la différence entre la largeur et la diagonale du chariot tournant présentant une surface rectangulaire.

Selon une autre caractéristique de l'invention, le noyau central de forme parallélépipédique rectangle comporte un plancher reposant sur le sol et représentant un rectangle étroit dont le petit côté est réduit à la dimension de la largeur de la porte d'enfournement.

Selon un mode d'exécution préférentiel, le noyau central comporte au dessus du plafond de la chambre de cuisson un corps horizontal formant logement dans lequel sont placés le coffret des commandes électriques, le canal de recyclage avec le ventilateur de recyclage et la batterie de chauffage, ainsi que la mécanique et la motorisation de la rotation du chariot tournant.

Selon ce même mode d'exécution préférentiel, le noyau central comporte un corps vertical disposé à l'arrière du plancher et contenant le collecteur de soufflage avec ses fentes verticales de soufflage des filets dire chaud ainsi que l'appareil de production de vapeur.

Un des avantages essentiels résultant de ces caractéristiques réside dans le fait que le four de boulangerie peut être entièrement monté à l'usine, ce qui permet de réduire considérablement le temps nécessaire à la mise en place et, par voie de conséquence, de réduire le temps de l'inutilisation du fournil. En effet, le noyau central étroit contient tous les appareils nécessaires au bon fonctionnement du four de boulangerie à chariot tournant et il suffit de démonter uniquement les deux couvercles latéraux pour passer par l'ouverture de la porte à simple battant de largeur normale et servant d'accès au fournil.

Les appareils de fonctionnement sont conçus afin qu'ils s'intègrent parfaitement dans le noyau central étroit tout en délimitant un volume correspondant à l'espace nécessaire au parallélépipède représenté par le chariot en position d'enfournement. Le volume ainsi réservé au chariot est ouvert sur l'avant et sur les deux côtés latéraux.

Un exemple de réalisation avantageuse de l'invention consiste dans le fait que les couvercles latéraux amovibles comportent, à leur base inférieure, un espace libre déterminant une garde au sol.

Il en résulte un autre avantage essentiel résidant dans le fait qu'il devient possible de manutentionner l'ensemble du four de boulangerie par un chariot élévateur à fourches sans faire usage d'une palette permettant d'éviter la difficile manoeuvre de dépalettisation.

L'invention est exposée ci-après plus en détail à l'aide de dessins représentant seulement un mode d'exécution.

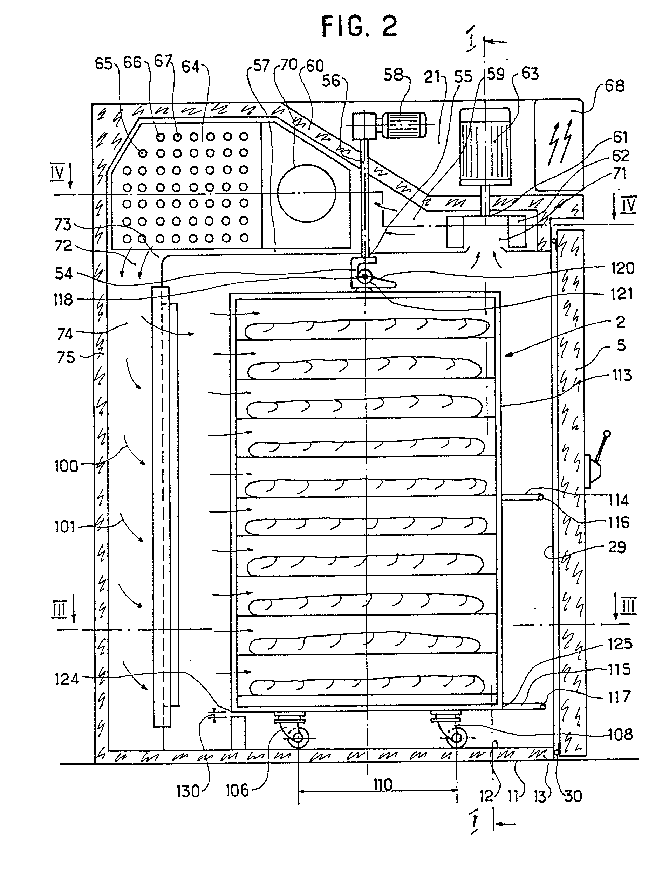

La figure 1 représente, en vue en élévation et en coupe, le four de boulangerie à chariot tournant conforme à l'invention, selon ligne de coupe I-I de la figure 2.

La figure 2 représente une vue de gauche en coupe du four de boulangerie selon ligne de coupe II-II de la figure 1.

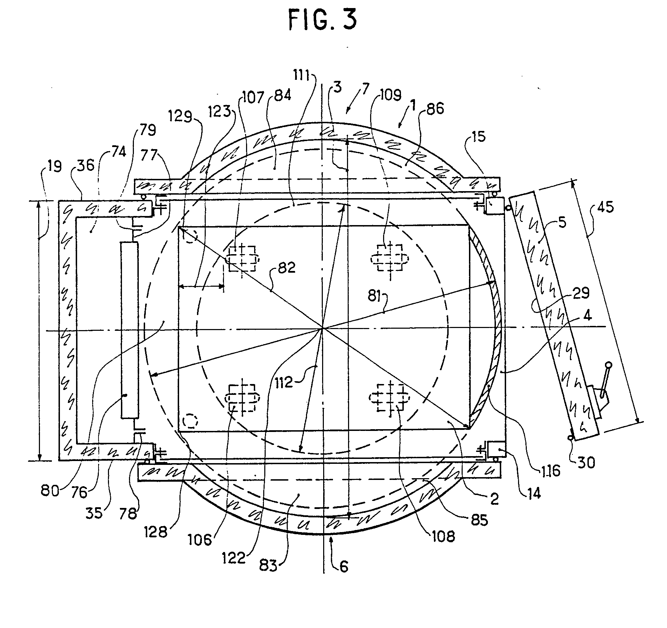

La figure 3 représente une vue en plan en coupe de ce four selon ligne de coupe III-III de la figure 2.

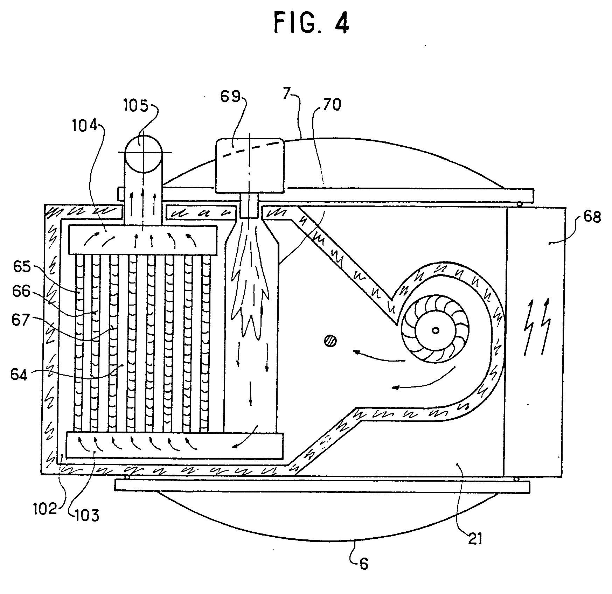

La figure 4 représente une vue en plan en coupe de ce four selon ligne de coupe IV-IV de la figure 2.

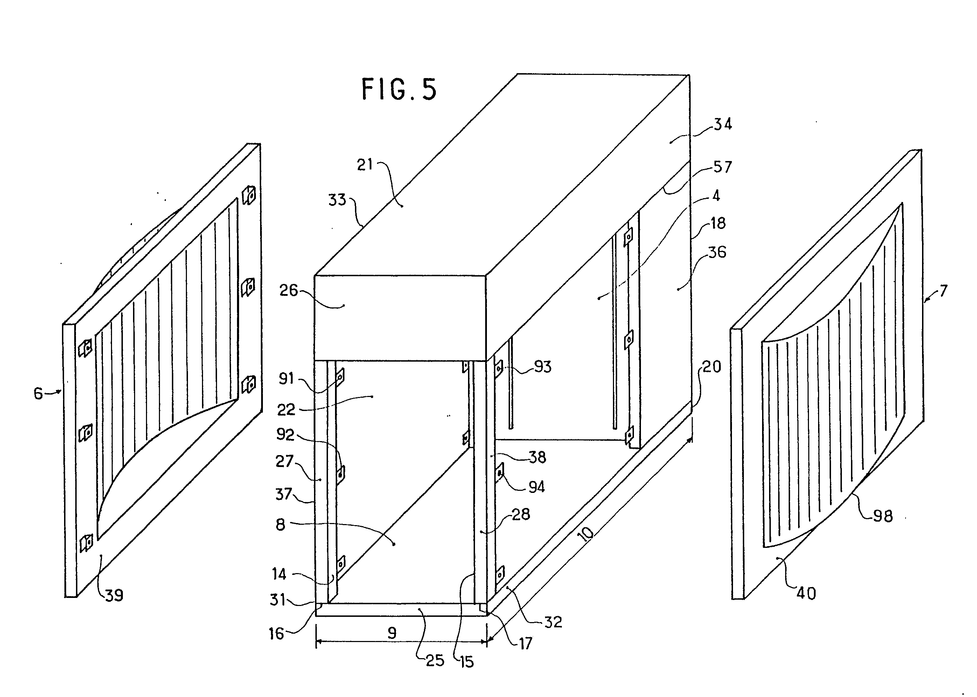

La figure 5 représente, en vue en perspective éclatée, le noyau central étroit et les deux couvercles latéraux amovibles.

On se réfère aux différentes figures.

Le four de boulangerie 1 à chariot tournant 2 pour la cuisson des produits de boulangerie, de viennoiserie, de pâtisserie et similaires est composé d'une structure constructive 3 constituée d'un noyau central 4, d'une porte d'enfournement 5 et de deux couvercles latéraux amovibles 6, 7. Usuellement, le chariot tournant 2 a une surface rectangulaire.

Le noyau central 4 présente une forme parallélépipédique rectangle dont la surface inférieure constitue le plancher 8. Ce plancher 8 de surface rectangulaire sert d'élément de base à l'ensemble du four de boulangerie 1. Conformément à l'invention, la largeur 9 de ce plancher 8 est perpendiculaire au sens d'enfournement du chariot tournant 2 alors que la longueur 10 constitue la profondeur du four de boulangerie 1. Ce plancher 8 se compose d'une paroi supérieure 11 servant de surface interne au four de boulangerie 1 et d'une paroi inférieure 12 servant de surface au contact du sol entre lesquelles on dispose un matériau isolant 13.

Ce plancher 8, constituant le socle du noyau central 4, sert de point d'ancrage, d'une part, à deux montants 14, 15 disposés aux coins avant 16, 17 du plancher 8 et, d'autre part, à un corps vertical 18 de largeur 19 identique à la largeur 9 du plancher 8, ce corps vertical 18 étant disposé à la partie arrière 20 dudit plancher 8. Les deux montants 14, 15 et le corps vertical 18 servent de support à un corps horizontal 21.

Ainsi, on obtient une ouverture rectangulaire frontale 22 et deux ouvertures rectangulaires latérales 23, 24. La paroi avant 25 du plancher 8, la paroi avant 26 du corps horizontal 21 et les faces frontales 27, 28 des montants 14, 15 servent de cadre dormant à l'ouverture rectangulaire frontale 22. Celle-ci est fermée par la porte d'enfournement 5 dont la paroi interne 29 est pourvue d'un joint d'étanchéité périphérique 30 venant s'appliquer sur ledit cadre dormant.

Les parois latérales 31, 32 du plancher 8, les parois latérales 33, 34 du corps horizontal 21, les parois latérales 35, 36 du corps vertical 18 et les faces latérales 37, 38 des montants 14, 15 servent de cadre dormant aux deux ouvertures rectangulaires latérales 23, 24. Celles-ci sont fermées par les couvercles latéraux amovibles 6, 7. Ces derniers comportent un cadre périphérique 39, 40 dont la paroi interne 41, 42 est pourvue d'un joint d'étanchéité périphérique 43, 44 venant s'appliquer contre les cadres dormants des ouvertures rectangulaires latérales 23, 24.

La largeur 9 du plancher 8 correspond à la largeur 45 de la porte d'enfournement 5, la largeur 45 de cette dernière étant déterminée par la largeur 45 du chariot tournant 2. Celui-ci, traversant pour son enfournement l'ouverture rectangulaire frontale 22, est un chariot ouvert constituant une échelle roulante supportant des plaques 47, 48, 49 chargées des produits à cuire 50, 51, 52.

Dans l'exemple choisi, le chariot tournant 2 s'accroche automatiquement lorsqu'il est poussé dans la chambre de cuisson 53 à un crochet 54 situé à la partie haute de cette dernière. Pour assurer pendant la cuisson une rotation, lente au chariot tournant, le crochet 54 est solidaire en rotation de l'extrémité inférieure 55 d'un arbre 56 traversant verticalement la paroi inférieure 57 du corps horizontal 21 et entraîné par un moteur-réducteur 58 logé dans ledit corps horizontal 21. Cette paroi inférieure 57 sert de plafond à la chambre de cuisson 53.

Le corps horizontal 21, constituant la partie supérieure du noyau central 4 du four de boulangerie 1, contient, en plus de l'arbre 56 et du moteurréducteur 58 assurant la rotation du chariot tournant 2 par l'intermédiaire de l'arbre 56, un canal de recyclage 59 avec son isolation 60, un ventilateur de recyclage 61 dont la turbine 62 est entraînée par un moteur 63, des moyens 64 de chauffage de l'air en provenance de la chambre de cuisson 53 présentant un faisceau de tubes 65, 66, 67 et un coffret des différentes commandes électriques 68 assurant le fonctionnement du moteurréducteur 58, du moteur 63 et d'un brûleur 69 relié par un tube de flamme 70 au corps horizontal 21. On réalise dans la paroi inférieure 57 du corps horizontal 21 une ouïe d'aspiration 71 permettant au ventilateur de recyclage 61 d'aspirer l'air de la chambre de cuisson 53.

Le corps vertical 18, dont l'extrémité supérieure 72 est ouverte et se trouve en face d'une ouverture 73 réalisée dans la paroi inférieure 57 du corps horizontal 21, constitue la partie arrière du noyau central 4 du four de boulangerie 1. Ce corps vertical 18 contient un collecteur de soufflage 74 de l'air chaud avec son isolation 75 et un appareil de production de vapeur 75 solidaire de la paroi interne 77 du corps vertical 18, cette paroi interne 77 constituant le fond de la chambre de cuisson 53. On réalise dans cette paroi interne 77 deux fentes verticales de soufflage 78, 79 disposées de part et d'autre de l'appareil de production de vapeur 76. En raison de la disposition particulière de ce dernier, l'air chaud pénétrant dans la chambre de cuisson 53 ne peut plus passer que par les fentes verticales de soufflage 78, 79.

L'appareil de production de vapeur 76 est quelconque en ce qui concerne sa configuration interne. Il contient des surfaces chauffées au préalable pour le circuit d'air chaud de recyclage. Pour produire de la vapeur, ces surfaces chauffées sont aspergées d'eau après l'enfournement du chariot tournant 2.

Ainsi, le noyau central 4 comporte tous les appareils nécessaires au fonctionnement du four de boulangerie 1 conforme à l'invention. De ce fait, un montage en usine du noyau central 4 équipé de tous ses appareils devient possible.

En raison de sa rotation, le chariot tournant 2 engendre un volume cylindrique 80 dont le diamètre 81 est égal à la diagonale 82 de la surface rectangulaire du chariot tournant 2. Il en résulte deux secteurs cylindriques 83, 84 faisant saillie de part et d'autre du noyau central 4 à travers les ouvertures latérales 23, 24. De ce fait, il est nécessaire que ces deux secteurs cylindriques 83, 84 puissent se loger dans les couvercles latéraux amovibles 6, 7. A cet effet, lesdits couvercles latéraux 6, 7 comportent un évidement 85, 86 dont la profondeur 87 est légèrement supérieure à la moitié de la différence entre la largeur 46 et la diagonale 82 du chariot tournant 2.

Selon un premier mode de réalisation, cet évidement 85, 86 est parallélépipédique. Cependant, on crée ainsi une perte du volume de cuisson délimité entre le volume cylindrique 80 engendré par le chariot tournant 2 et les évidements parallélépipédiques 85, 86.

Selon un second mode de réalisation préférentiel, cet évidement 85, 85 a une forme de secteur cylindrique épousant les secteurs cylindriques 83, 84 du volume cylindrique 80 engendré par le chariot tournant 2.

Cependant, pour que le chariot tournant 2 puisse s'engager dans les évidements 85, 86, il est nécessaire que la paroi inférieure 88, 89 de ces évidements 85, 86 soit légèrement plus basse que la base rectangulaire 90 du chariot tournant 2.

Ainsi, dans le cas où il faut ripper le four de boulangerie 1 au travers du cadre étroit d'une éventuelle porte normale à simple battant, il est possible de réduire le four de boulangerie 1 à la largeur du noyau central 4 correspondant à la largeur 9 de son plancher 8 en dévissant et revissant rapidement les deux couvercles latéraux 6, 7. A cet effet, la fixation des couvercles latéraux amovibles 6, 7 sur le noyau central 4 est réalisée par des rangées de boulons 91, 92, 93, 94 accessibles par l'intérieur de la chambre de cuisson 53.

Conformément à l'invention, un des buts essentiels recherché consiste en la possibilité de décharger le four de boulangerie 1 entièrement monté depuis le plateau du camion de livraison à l'aide d'un chariot-élévateur à fourches ou de rouler ledit four de boulangerie 1 à l'aide d'un tire-palette jusqu'à son endroit d'exploitation. A cet effet, les couvercles latéraux amovibles 6, 7 comportent à leur base inférieure 97, 98 un espace libre 99, déterminant une garde au sol. Cet espace libre permet la mise en place des fourches soit du chariot-élévateur, soit du tire-palette.

Selon un premier mode de réalisation, cet espace libre 99 est obtenu en réalisant des ajours dans les bases inférieures 97, 98 des couvercles latéraux 6, 7.

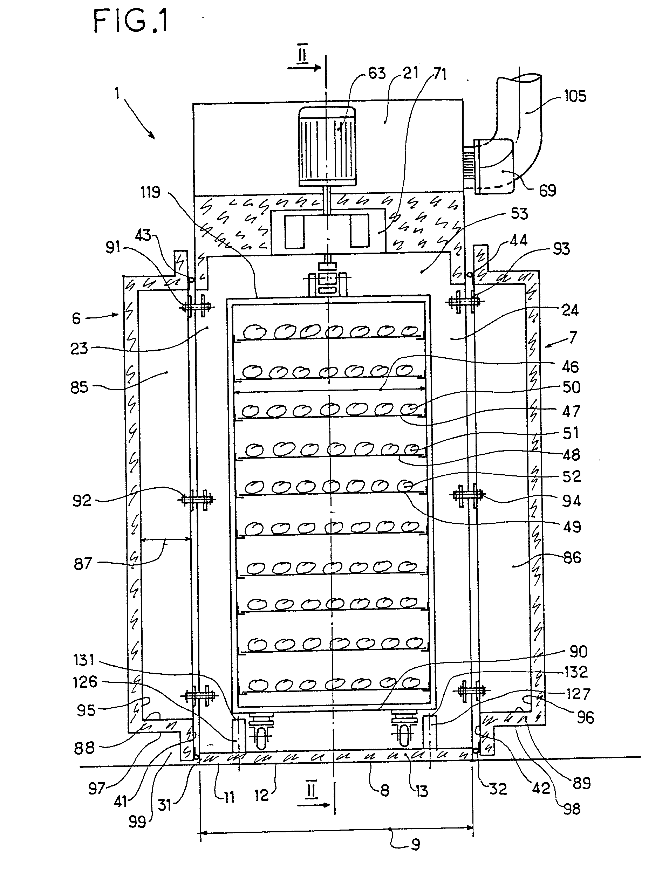

Selon un autre mode de réalisation visible notamment dans la figure 1, les bases inférieures 97, 98 sont rehaussées par rapport aux cadres périphériques 39, 40, ces derniers ne touchant pas le sol.

La chambre de cuisson 53 se trouve donc délimitée à l'avant par la paroi interne 29 de la porte d'enfournement 5, à l'arrière par la paroi interne 77 du corps vertical 18, latéralement par les surfaces internes 95, 96 des évidements 85, 86 des couvercles latéraux amovibles 6, 7, dans son bas par la paroi supérieure 11 du plancher 8 et en haut par la paroi inférieure 57 du corps horizontal 21.

Suite à l'enfournement du chariot tournant 2 dans la chambre de cuisson 53 et après injection d'eau dans l'appareil de production de vapeur 76, la chaleur nécessaire à la cuisson est apportée par les filets d'air chaud figurés par les flèches 100, 101 soufflés à travers les fentes verticales 78, 79 du collecteur de soufflage 74. Après avoir traversé le chariot tournant 2 entre les plaques 47, 48, 49 et en léchant les produits à cuire 50, 51, 52, les filets dire, appauvris en chaleur sont aspirés à travers l'ouïe d'aspiration 71 par la turbine 62 du ventilateur de recyclage 61 qui les refoule, à travers la batterie de chauffage 64, à nouveau vers le collecteur de soufflage 74 et ainsi de suite.

Selon un premier mode de réalisation, les moyens de chauffage 64 sont formés par un échangeur de chaleur pour combustibles liquides ou gazeux particulièrement conçu pour être logé dans la partie arrière 102 du corps horizontal 21 du noyau central 4. Depuis le brûleur 69, les gaz de combustion décrivent un parcours sensiblement horizontal à travers le tube de flamme 70 et débouchent dans un caisson collecteur 103 qui les renvoie en sens inverse à travers le faisceau des tubes 65, 66, 67 dans un caisson collecteur 104 pour être évacués par une cheminée d'évacuation 105.

Les filets d'air refoulé par le ventilateur de recyclage 61 sont pulsés perpendiculairement au tube de flamme 70 et au faisceau des tubes 65, 66, 67 en s'y réchauffant, les surfaces d'échange des caissons collecteurs 103, 104 collaborant également à cet échange de chaleur.

Cette disposition particulière permet d'atteindre tous ces éléments d'échange de chaleur, sans que ces éléments constituent des excroissances par rapport au volume parallélépipédique du noyau central 4 du four de boulangerie.

Selon un autre mode de réalisation, les moyens de chauffage 64 peuvent être formes par un faisceau quelconque de résistances électriques qui ne pose, dans son principe, aucune difficulté particulière d'implantation dans la structure dudit noyau central 4.

Le chariot tournant 2 comporte, pour sa manutention, quatre roues tournantes 106, 107, 108, 109. Habituellement, les roues tournantes sont disposées aux quatre coins de sa base rectangulaire. Cependant, en raison de la structure constructive 3 du four de boulangerie 1, le chariot tournant 2 est spécialement conçu pour s'adapter à ladite structure constructive 3. A cet effet, les quatre roues tournantes 106, 107, 108, 109 sont rapprochées notamment en ce qui concerne leur empattement 110 de sorte qu'elles s'inscrivent dans un cercle d'évolution 111 dont le diamètre 112 est légèrement inférieur à la largeur 9 du plancher 8 du noyau central 4. De ce fait, les roues tournantes 106, 107, 108, 109 ne viennent pas heurter les cadres périphériques 39, 40 des couvercles latéraux amovibles 6, 7.

Pour permettre au chariot tournant 2 de monter sur le plancher 8 du noyau central 4, et donc, lors de son enfournement, de franchir la marche constituée par la paroi avant 25 dudit plancher 8, on pourvoit la face arrière 113 du chariot tournant 2 de deux poignées 114, 115 sous forme d'une anse circulaire, ladite face arrière 113 étant du côté de la porte d'enfournement 5. L'une de ces poignées 114 est disposée à hauteur de mains alors que l'autre poignée 115 est disposée à hauteur de pieds. Les contours 116, 117 de ces poignées 114, 115 s'inscrivent à l'intérieur du volume cylindrique 80.

En poussant par la poignée supérieure 114 le chariot tournant 2 vers i'intérieur de la chambre de cuisson 53, les roues tournantes avant 106, 107 butent contre la paroi avant 25 du plancher 8 du noyau central 4. On appuie alors d'un pied sur la poignée inférieure 115, ce qui fait pencher le chariot tournant 2 vers l'utilisateur, les roues tournantes avant 106, 107 se soulèvent et peuvent monter sur le plancher 8 du noyau central 4. Dans l'élan de la poussée du chariot tournant 2, les roues tournantes arrière 108, 109 suivent cette montée. Le galet 118, solidaire du dessus 119 du chariot tournant 2, grimpe la rampe de guidage 120 du crochet 54 pour tomber dans la gorge de retenue 121 de ce dernier. Le chariot tournant se trouve ainsi enfourné et suspendu, les roues tournantes 106, 107, 108. 109 étant légèrement décollées du plancher 8.

Du fait que les quatre roues tournantes 106, 107, 108, 109 sont rapprochées de l'axe central 122 du chariot tournant 2, il existe une certaine longueur 123 entre les roues tournantes avant 106, 107 et le chant avant 124 du chariot tournant 2. Or, pour décrocher ce dernier à la fin de la cuisson, l'utilisateur tire des deux mains sur la poignée supérieure 114. De ce fait, le chariot tournant 2 s'incline vers l'utilisateur. Pour dégager le galet 118 de la gorge de retenue 121 du crochet 54, il est nécessaire que l'usager, en soulevant le chant arrière 125 du chariot tournant 2, puisse appuyer le chant avant 124 de celui-ci sur un appui. A cet effet, on pourvoit la paroi supérieure 11 du plancher 8 de deux butées 126, 127 sur lesquelles le chant avant 124 du chariot tournant 2 peut prendre appui lors de la phase de décrochement. Ces deux butées 126, 127 sont disposées au droit de deux angles avant 128, 129 de la base rectangulaire 90 du chariot tournant 2, avec un léger jeu 130 entre cette base 90 et le dessus 131, 132 des butées 126, 127.

## Revendications

1. Four de boulangerie à chariot tournant (2)

pour la cuisson des produits (50, 51, 52) de boulangerie, de viennoiserie, de pâtisserie et similaires comprenant une chambre de cuisson (53) obturée par une porte d'enfournement (5), un coffret de commandes électriques (68), un canal de recyclage (59) pourvu d'un ventilateur de recyclage (61) et de moyens de chauffage (64) de l'air en provenance de la chambre de cuisson (53), une mécanique (54, 56) et une motorisation (58) de la rotation du chariot (2), un collecteur de soufflage (74) avec ses fentes verticales (78, 79) et un appareil de production de vapeur (76), caractérisé en ce qu'il comporte une structure constructive (3), de largeur correspondant au diamètre (81) du volume cylindrique (80) engendré par le chariot tournant (2), constituée d'un noyau central (4), de forme parallélépipédique rectangle de largeur (9) correspondant à la largeur (45) de la porte d'enfournement (5), elle-même déterminée par la largeur (46) du chariot tournant (2), et de deux couvercles latéraux amovibles (6, 7) présentant un évidement (85, 86) dont la profondeur (87) est légèrement supérieure à la moitié de la différence entre la largeur (46) et la diagonale (82) du chariot tournant (2) présentant une surface rectangulaire.

2. Four de boulangerie selon la revendication 1, caractérisé en ce que le noyau central (4), de forme parallélépipédique rectangle, comporte un plancher (8) reposant sur le sol et représentant un rectangle étroit dont le petit côté (9) est réduit à la dimension de la largeur (45) de la porte d'enfournement (5).

3. Four de boulangerie selon la revendication 1, caractérisé en ce que le noyau central (4) comporte un corps vertical (18) disposé à la partie arrière (20) du plancher (8) et contenant le collecteur de soufflage (74) avec ses fentes verticales de soufflage (79, 80) des filets d'air chaud (100, 101) ainsi que l'appareil de production de vapeur (76).

4. Four de boulangerie selon la revendication 1, caractérisé en ce que le noyau central (4) comporte un corps horizontal (21) reposant sur le corps vertical (18) et sur deux montants (14, 15) disposés aux coins avant (16, 17) du plancher (8) et formant logement dans lequel sont placés le coffret de commandes électriques (68), le canal de recyclage (59) avec le ventilateur de recyclage (61) et les moyens (64) de chauffage de l'air en provenance de la chambre de cuisson (53) ainsi que la mécanique (54 à 56) et la motorisation (58) de la rotation du chariot tournant (2).

5. Four de boulangerie selon la revendication 1, caractérisé en ce que le noyau central (4) comporte une ouverture frontale (22) délimitée par un cadre dormant constitué par la paroi avant (25) du plancher (8), la paroi avant (26) du corps horizontal (21) et les faces frontales (27, 28) des montants (14, 15), cette ouverture frontale (22) étant fermée par la porte d'enfournement (5).

6. Four de boulangerie selon la revendication 1, caractérisé en ce que le noyau central (4) comporte deux ouvertures rectangulaires latérales (23, 24) délimitées par un cadre dormant constitué par les parois latérales (31, 32) du plancher (8),

les parois latérales (33, 34) du corps horizontal (21), les parois verticales (18) et les faces latérales (37, 38) des montants (14, 15), ces ouvertures rectangulaires latérales (23, 24) étant fermées par les couvercles latéraux amovibles (6, 7) maintenus par des rangées de boulons (91, 92, 93, 94) accessibles par l'intérieur de la chambre de cuisson (53).

7. Four de boulangerie selon la revendication 1, caractérisé en ce que la chambre de cuisson (53) est délimitée à l'avant par la paroi interne (29) de la porte d'enfournement (5), à l'arrière par la paroi interne (77) du corps vertical (18), latéralement par les surfaces internes (95, 96) des évidements (85, 86) des couvercles latéraux amovibles (6, 7), dans le bas par la paroi supérieure (11) du plancher (8) et dans le haut par la paroi inférieure (57) du corps horizontal (21).

8. Four de boulangerie selon la revendication 1, caractérisé en ce que le diamètre (81) du volume cylindrique (80) est égal à la diagonale (82) de sa surface rectangulaire, ce volume cylindrique (80) comportant deux secteurs cylindriques (83, 84) faisant saillie de part et d'autre du noyau central (4) à travers les ouvertures latérales (23, 24).

9. Four de boulangerie selon la revendication 1, caractérisé en ce que les évidements (85, 86) des couvercles latéraux amovibles (6, 7) comportent une paroi inférieure (88, 89) légèrement plus basse que la base rectangulaire (90) du chariot tournant (2).

10. Four de boulangerie selon la revendication 1, caractérisé en ce que les couvercles latéraux amovibles (6, 7) comportent un évidement parallélépipédique (85, 86).

11. Four de boulangerie selon la revendication 1, caractérisé en ce que les couvercles latéraux amovibles (6, 7) comportent un évidement (85, 86) de forme de secteur cylindrique.

12. Four de boulangerie selon la revendication 1, caractérisé en ce que les couvercles latéraux amovibles (6, 7), pourvus d'un cadre périphérique (39, 40) dont la paroi interne (41, 42) présente un joint d'étanchéité périphérique (43, 44) s'appliquant contre les cadres dormants des ouvertures rectangulaires latérales (23, 24), comportent à leur base inférieure (97, 98) un espace libre (99) déterminant une garde au sol.

13. Four de boulangerie selon la revendication 12, caractérisé en ce que les bases inférieures (97, 98) des couvercles latéraux amovibles (6, 7) sont pourvues d'un ajour constituant l'espace libre (99).

14. Four de boulangerie selon la revendication 12, caractérisé en ce que les bases inférieures (97, 98) des couvercles latéraux amovibles (6, 7) sont rehaussées par rapport aux cadres périphériques (39, 40).

15. Four de boulangerie selon la revendication 1, caractérisé en ce que les moyens de chauffage de l'air en provenance de la chambre de cuisson (53) aspiré par le ventilateur de recyclage (61) à travers une ouïe d'aspiration (71) réalisée dans la paroi inférieure (57) du corps horizontal, puis refoulé vers les moyens de chauffage, sont formés par un échangeur de chaleur pour combustibles liquides ou gazeux constitué par un brûleur (69), un tube de flamme (70) à travers duquel les gaz de combustion décrivent un parcours sensiblement horizontal, un caisson collecteur (103), un faisceau de tubes (65, 66, 67), et un caisson collecteur (104) dirigeant les gaz de combustion vers une cheminée d'évacuation (105).

16. Four de boulangerie selon la revendication 15, caractérisé en ce que le brûleur (69), le tube de flamme (70) et le faisceau de tubes (65, 66, 67) sont disposés perpendiculairement aux filets d'air refoulé par le ventilateur de recyclage (61).

17. Four de boulangerie selon la revendication 1, caractérisé en ce que les moyens de chauffage de l'air en provenance de la chambre de cuisson (53) sont un faisceau de résistances électriques.

18. Four de boulangerie selon la revendication 1, caractérisé en ce que le chariot tournant (2) comporte des roues tournantes (106, 107, 108, 109) s'inscrivant dans un cercle d'évolution (111) dont le diamètre (112) est légèrement inférieur à la largeur (9) du plancher (8) du noyau central (4).

19. Four de boulangerie selon la revendication 1, caractérisé en ce que la face arrière (113) du chariot tournant (2), située du côté de la porte d'enfournement (5), comporte une poignée supérieure (114) disposée à hauteur de mains et une poignée inférieure (115) disposée à hauteur de pieds, ces poignées (114, 115) ayant la forme d'une anse circulaire.

20. Four de boulangerie selon la revendication 19, caractérisé en ce que les poignées (114, 115) comportent un contour (116, 117) s'inscrivant à l'intérieur du volume cylindrique (80).

21. Four de boulangerie selon les revendications 1 et 2, caractérisé en ce que le plancher (8) comporte deux butées (126, 127) disposées au droit des deux angles avant (128, 129) de la base rectangulaire (90) du chariot tournant (2), ces butées (126, 127) ayant une hauteur telle qu'il existe un léger jeu (130) entre leur dessus (131, 132) et le dessous de la base rectangulaire (90) du chariot tournant (2).

**Patentansprüche**

1. Bäckereiofen mit Drehbackwagen (2) zum Backen von Brot-, Wienerbackwaren, feine Backwaren (50, 51, 52) und dgl., umfassend eine Backkammer (53), die mit einer Beschickungstür (5) versperrt ist, einen elektrischen Steuerungenkasten (68), eine Rückführungsleitung (59), die mit einem Rückführungsventilator (61) und Mitteln (64) zum Erhitzen der von der Backkammer (53) kommenden Luft versehen ist, einen Mechanismus (54, 56) und einen Motor (58) für die Drehung des Backwagens (2), eine Blasesammelleitung (74) mit deren senkrechten Schlitzen (78, 79) und ein Dampferzeugungsgerät (76), dadurch gekennzeichnet, daß er eine Baustruktur (3) einer Breite, die dem Durchmesser (81) des vom Drehbackwagen (3) erzeugten zylindrischen Volumens (80) entspricht, umfaßt, die besteht aus einem zentralen Kern (4) der Form eines rechteckigen Parallelepipedons, dessen Breite (9) der Breite (45) der Beschickungstür (5) entspricht, welche selbst von der Breite (46) des Drehbackwagens (2) bestimmt ist, und aus zwei ausnehmbaren Seitendeckeln (6, 7), die eine Aussparung (85, 86) aufweisen, deren Tiefe (87) geringfügig größer ist als die Hälfte des Unterschieds zwischen der Breite (46) und der Diagonale (82) des eine rechteckige Fläche aufweisenden Drehbackwagens (2).

2. Bäckereiofen nach Anspruch 1, dadurch gekennzeichnet, daß der zentrale Kern (4), einer rechteckigen Parallelepipedonform, einen Boden (8) umfaßt, der auf der Erde ruht und ein schmales Rechteck darstellt, dessen kleine Seite (9) auf die Breitenabmessung (45) der Beschickungstür (5) beschränkt ist.

3. Bäckereiofen nach Anspruch 1, dadurch gekennzeichnet, daß der zentrale Kern (4) einen am Hinterteil (20) des Bodens (8) angeordneten senkrechten Körper (18) umfaßt, der die Blasesammelleitung (74) mit deren senkrechten Schlitzen (79, 80) zum Blasen von Strahlen (100, 101) warmer Luft, sowie das Dampferzeugungsgerät (76) einschließt.

4. Bäckereiofen nach Anspruch 1, dadurch gekennzeichnet, daß der zentrale Kern (4) einen waagerechten Körper (21) umfaßt, der auf dem senkrechten Körper (18) und auf zwei, an den Vorderecken (16, 17) des Bodens (8) angeordneten Pfosten (14, 15) ruht und ein Gehäuse bildet, in dem der elektrische Steuerungenkasten (68), die Rückführungsleitung (59) mit dem Rückführungsventilator (61) und den Mitteln (64) zum Erhitzen der aus der Backkammer (53) kommenden Luft, sowie der Mechanismus (54, 56) und der Motor (58) für die Drehung des Backwagens (2) angeordnet sind.

5. Bäckereiofen nach Anspruch 1, dadurch gekennzeichnet, daß der zentrale Kern (4) eine Vorderüoffnung (22) umfaßt, die abgegrenzt ist von einem Rahmen, der aus der Vorderwand (25) des Bodens (8), der Vorderwand (26) des waagerechten Körpers (21) und den Vorderflächen (27, 28) der Pfosten (14, 15) gebildet ist, wobei diese Vorderöffnung (22) von der Beschickungstür (5) versperrt ist.

6. Bäckereiofen nach Anspruch 1, dadurch gekennzeichnet, daß der zentrale Kern (4) rechteckige Seitenöffnungen (23, 24) umfaßt, die abgegrenzt sind von einem Rahmen, der aus den Seitenwänden (31, 32) des Bodens (8), den Seitenwänden (33, 34) des waagerechten Körpers (21), den senkrechten Wänden (18) und den Seitenflächen (37, 38) der Pfosten (14, 15) gebildet ist, wobei diese rechteckigen Seitenöffnungen (23, 24) von den ausnehmbaren Seitendeckeln (6, 7) versperrt sind, welche mittels von der Innenseite der Backkammer (53) aus zugänglicher Reihen von Bolzen (91, 92, 93, 94) befestigt sind.

7. Bäckereiofen nach Anspruch 1, dadurch gekennzeichnet, daß die Backkammer (53) an der Vorderseite von der Innenwand (29) der Beschickungstür (5), an der Hinterseite von der Innenwand (77) des senkrechten Körpers (18), seitlich von den Innenflächen (95, 96) der Aussparungen (85, 86) der ausnehmbaren Seitendeckel (6, 7), an der Unterseite von der oberen Wand (11) des Bodens (8) und an der Oberseite von der unteren Wand (57) des waagerechten Körpers (21) abgegrenzt ist.

8. Bäckereiofen nach Anspruch 1, dadurch gekennzeichnet, daß der Durchmesser (81) des zylindrischen Volumens (80) gleich der Diagonale (82) dessen rechteckigen Fläche ist, wobei dieses zylindrische Volumen (80) zwei zylindrische Sektoren (83, 84) umfaßt, die an beiden Seiten des zentralen Kerns (4) aus den Seitenöffnungen (23, 24) hervorragen.

9. Bäckereiofen nach Anspruch 1, dadurch gekennzeichnet, daß die Aussparungen (85, 86) der ausnehmbaren Seitendeckel (6, 7) eine untere Wand (88, 89) umfassen, die geringfügig niedriger ist als die rechteckige Basis (90) des Drehbackwagens (2).

10. Bäckereiofen nach Anspruch 1, dadurch gekennzeichnet, daß die ausnehmbaren Seitendeckel (6, 7) eine parallelepipedonförmige Aussparung (85, 86) umfassen.

11. Bäckereiofen nach Anspruch 1, dadurch gekennzeichnet, daß die ausnehmbaren Seitendeckel (6, 7) eine Aussparung (85, 85) der Form eines zylindrischen Sektors umfassen.

12. Bäckereiofen nach Anspruch 1, dadurch gekennzeichnet, daß die ausnehmbaren Seitendeckel (6, 7), die mit einem Umkreisrahmen (39, 40) versehen sind, dessen Innenwand (41, 42) eine gegen die Rahmen der rechteckigen Seitenöffnungen (23, 24), anliegende Umkreisdichtung (43, 44) aufweist, an ihrer unteren Basis (97, 98) einen freien Raum (99), der eine Bodenfreiheit bestimmt, umfassen.

13. Bäckereiofen nach Anspruch 12, dadurch gekennzeichnet, daß die unteren Basen (97, 98) der Seitendeckel (6, 7) mit einer Öffnung, die den freien Raum (99) bestimmt, versehen sind.

14. Bäckereiofen nach Anspruch 12, dadurch gekennzeichnet, daß die unteren Basen (97, 98) der Seitendeckel (6, 7) bezüglich der Umkreisrahmen (39, 40) erhoben sind.

15. Bäckereiofen nach Anspruch 1, dadurch gekennzeichnet, daß die Mittel zum Erhitzen der von der Backkammer (53) kommenden, vom Rückführungsventilator (61) durch eine in der unteren Wand (57) des waagerechten Körpers vorgesehene Ansaugöffnung (71) angesaugten, danach zu den Heizungsmitteln zurückgedrängten Luft bestehen aus einem Wärmeaustauscher für flüssige oder gasige Brennstoffe, der besteht aus einem Brenner (69), einem Flammenrohr (70), durch das die Verbrennungsgase einen wesentlich waagerechten Weg folgen, einem Sammelkasten (103), einem Rohrenbündel (65, 66, 67) und einem Sammelkasten (104), der die Verbrennungsgase zu einem Abfuhrschacht (105) führt.

16. Bäckereiofen nach Anspruch 15, dadurch gekennzeichnet, daß der Brenner (69), das Flammenrohr (70) und das Rohrenbündel (65, 66, 67) senkrecht zu den vom Rückführungsventilator (61) verdrängten Luftstrahlen angeordnet sind.

17. Bäckereiofen nach Anspruch 1, dadurch gekennzeichnet, daß die Mittel zum Erhitzen der von der Backkammer (53) kommenden Luft ein elektrisches Widerständenbündel sind.

18. Bäckereiofen nach Anspruch 1, dadurch gekennzeichnet, daß der Drehbackwagen (2) Drehräder (106, 107, 108, 109) umfaßt, die in einem Evolutionskreis (111) eingetragen sind, dessen Durchmesser (112) geringfügig kleiner als die Breite (9) des Bodens (8) des zentralen Kerns (4) ist.

19. Bäckereiofen nach Anspruch 1, dadurch gekennzeichnet, daß die an der Seite der Beschickungstür (5) befindliche Hinterfläche (113) des Drehbackwagens (2) einen oberen, in Handhöhe angeordneten Handgriff (114) und einen unteren, in Fußhöhe angeordneten Handgriff (115) umfaßt, wobei diese Handgriffe (114, 115) der Form eines kreisförmigen Henkels sind.

20. Bäckereiofen nach Anspruch 19, dadurch gekennzeichnet, daß die Handgriffe (114, 115) einen Umriß (116, 117) umfassen, der innerhalb des zylindrischen Volumens (80) eingetragen ist.

21. Bäckereiofen nach Ansprüchen 1 und 2, dadurch gekennzeichnet, daß der Boden (8) zwei im Breich der beiden Vorderwinkel (128, 129) der rechteckigen Basis (90) des Drehbackwagens (2) angeordnete Anschläge (126, 127) umfaßt, wobei diese Anschläge (126, 127) einer derartigen Höhe sind, daß es ein geringfügiges Spiel (130) zwischen deren Oberseite (131, 132) und der rechteckigen Basis (90) des Drehbackwagens (2) gibt.

## Claims

1. Bakery oven with a rotating trolley (2) for the baking of bakery, Viennese bread, pastry products (50, 51, 52) and the like, comprising a baking chamber (53) obturated by a charging door (5), an electric control box (68), a recycling channel (59) provided with a recycling fan (61) and heating means (64) for the air coming from the baking chamber (53), a rotation mechanism (54, 56) and motorization (58) for the trolley (2), a blowing collector (74) with its vertical slots (78, 79) and a steam-production device (75), characterized in that it comprises a constructive structure (3) with a width corresponding to the diameter (81) of the cylindrical volume (80) generated by the rotating trolley (2), comprised of a central core (4), of a rectangular parallelepipedic shape with a width (9) corresponding to the width (45) of the charging door (5) which is, in turn, determined by the width (46) of the rotating trolley (2), and two removable side covers (6, 7) having a recess (85, 86) the depth (87) of which is slightly larger than half the difference between the width (46) and the diagonal (82) of the rotating trolley (2) having a rectangular surface.

2. Bakery oven according to claim 1, characterized in that the central core (4), of a rectangular parallelepipedic shape, comprises a floor (8) resting on the ground and forming a narrow rectangle the small side (9) of which is reduced to the size of the width (45) of the charging door (5).

3. Bakery oven according to claim 1, characterized in that the central core (4) comprises a vertical body (18) arranged at the rear (20) of the floor (8) and containing the blowing collector (74) with its vertical slots (79, 80) for the blowing of hot-air streams (100, 101) as well as the steam-production device (76).

4. Bakery oven according to claim 1, characterized in that the central core (4) comprises a horizontal body (21) resting on the vertical body (18) and on two stiles (14, 15) arranged in the front corners (16, 17) of the floor (8) and forming a housing in which are arranged the electric control box (68), the recycling channel (59) with the recycling fan (61) and the means (64) for heating the air coming from the baking chamber (53) as well as the rotation mechanism (55 through 56) and the motorization (58) for the rotating trolley (2).

5. Bakery oven according to claim 1, characterized in that the central core (4) comprises a front opening (22) defined by a sashframe formed by the front wall (25) of the floor (8), the front wall (26) of the horizontal body (21) and the front faces (27, 28) of the stiles (14, 15), this front opening (22) being obturated by the charging door (5).

6. Bakery oven according to claim 1, characterized in that the central core (4) comprises two rectangular side openings (23, 24) defined by a sash-frame formed by the side walls (31, 32) of the floor (8), the side walls (33, 34) of the horizontal body (21), the vertical walls (18) and the side faces (37, 38) of the stiles (14, 15), these rectangular side openings (23, 24) being obturated by the removable side covers (6, 7) maintained by the rows of bolts (91, 92, 93, 94) accessible from inside the baking chamber (53).

7. Bakery oven according to claim 1, characterized in that the baking chamber (53) is defined at the front by the inner wall (29) of the charging door (5), at the rear by the inner wall (77) of the vertical body (18), sidely by the inner surfaces (95, 96) of the recesses (85, 86) of the removable side covers (5, 7), at its bottom by the upper wall (11) of the floor (8) and at the top by the lower wall (57) of the horizontal body (21).

8. Bakery oven according to claim 1, characterized in that the diameter (81) of the cylindrical volume (80) is equal to the diagonal (82) of the rectangular surface, this cylindrical volume (80) comprising two cylindrical sectors (83, 84) protruding, on both sides of the central core (4), through the side openings (23, 24).

9. Bakery oven according to claim 1, characterized in that the recesses (85, 86) of the removable side covers (6, 7) have a lower wall (88, 89) slightly lower than the rectangular base (90) of the rotating trolley (2).

10. Bakery oven according to claim 1, characterized in that the side covers (6, 7) have a parallelepipedic recess (85, 86).

11. Bakery oven according to claim 1, characterized in that the side covers (6, 7) have a recess (85, 86) with a cylindrical sector shape.

12. Bakery oven according to claim 1, characterized in that the side covers (6, 7), provided with a peripheral frame (39, 40) the inner wall (41, 42) of which has a peripheral seal (43, 44) applying against the sash-frames of the rectangular side openings (23, 24), comprise, at their lower base (97, 98) a free space (99) defining a ground clearance.

13. Bakery oven according to claim 12, characterized in that the lower base (97, 98) of the side covers (6, 7) are provided with an opening forming the free space (99).

14. Bakery oven according to claim 12, characterized in that the lower base (97, 98) of the side covers (6, 7) are raised with respect to the peripheral frames (39, 40).

15. Bakery oven according to claim 1, characterized in that the means for the heating of the air coming from the baking chamber (53), sucked by the recycling fan (61) through a suction opening (71) made in the inner wall (57) of the horizontal body, then delivered to the heating means, are formed by a heat exchanger for liquid or gas fuels formed by a burner (69), a flame tube (70) through which the combustion gases describe a substantially horizontal path, a collecting tank (103), a bundle of tubes (65, 66, 67) and a collecting tank (104) directing the combustion gases to an exhaust chimney (105).

16. Bakery oven according to claim 15, characterized in that the burner (69), the flame tube (70) and the bundle of tubes (65, 66, 67) are arranged perpendicularly to the air streams delivered by the recycling fan (61).

17. Bakery oven according to claim 1, characterized in that the means for the heating of the air coming from the baking chamber (53) are a bundle of electric resistors.

18. Bakery oven according to claim 1, characterized in that the rotating trolley (2) comprises rotating wheels (106, 107, 108, 109) which are inscribed into an evolution circle (111) the diameter (112) of which is slightly smaller than the width (9) of the floor (8) of the central core (4).

19. Bakery oven according to claim 1, characterized in that the rear face (113) of the rotating trolley (2), located on the side of the charging door (5), comprises an upper handle (114) arranged at hand height and a lower handle (115) arranged at foot height, these handles (114, 115) having the shape of a circular ear.

20. Bakery oven according to claim 19, characterized in that the handles (114, 115) comprise an outline (116, 117) being inscribed inside the cylindrical volume (80).

21. Bakery oven according to claims 1 and 2, characterized in that the floor (8) comprises two thrusts (126, 127) arranged at the two front corners (128, 129) of the rectangular base (90) of the rotating trolley (2), these thrusts (126, 127) having such an height that there exists a slight backlash (130) between their top (131, 132) and the bottom of the rectangular base (90) of the rotating trolley.

FIG.1

EP 0 237 455 B1

# FIG. 2

# FIG. 3

# FIG. 4

FIG.5